# EUROPÄISCHE PATENTSCHRIFT

(11) **EP 1 935 676 B1**
(45) Veröffentlichungstag und Bekanntmachung des Hinweises auf die Patenterteilung: **08.04.2009**
(21) Anmeldenummer: 07023631.0
(22) Anmeldetag: 06.12.2007
(51) Int. Cl.: B60D 5/00, B61D 17/22

(54) **Vorrichtung zur Verhinderung der Überdehnung eines Falten- oder Wellenbalgelements eines durch einen Mittelrahmen geteilten Falten- oder Wellenbalges**
Device for preventing excessive bending of a bellows or gangway bellows component of a bellows or gangway bellows which is split by a central divider
Dispositif destiné à empêcher l'allongement excessif d'un élément à soufflet ou à plis d'un soufflet ou soufflet pliant séparé par un cadre central

(30) Priorität: 23.12.2006 DE 202006019463 U; 02.02.2007 DE 202007001525 U
(43) Veröffentlichungstag der Anmeldung: 25.06.2008
(73) Patentinhaber: Hübner GmbH, 34123 Kassel (DE)
(72) Erfinder: Mosaner, Knud, 34127 Kassel (DE); Schuster, Heinz, 34123 Kassel (DE); Karasaek, Jens, 34260 Kaufungen (DE)
(74) Vertreter: Walther, Walther & Hinz GbR

(56) Entgegenhaltungen:
- EP-A- 0 538 816
- WO-A-95/00381
- DE-A1- 3 545 863
- FR-A- 2 443 940
- GB-A- 446 003
- US-A- 3 834 752
- US-A- 4 781 123

## Beschreibung

Die vorliegende Erfindung betrifft eine Vorrichtung zur Verhinderung der Überdehnung eines Falten- oder Wellenbalgelements eines durch einen Mittelrahmen geteilten Falten- oder Wellenbalges, der zwischen zwei gelenkig miteinander verbundenen Fahrzeugteilen angeordnet ist, wobei der Mittelrahmen mit dem mindestens einen Fahrzeugteil durch eine auf Zug beanspruchbare Federeinrichtung verbunden ist.

Gelenkfahrzeuge sind bekannt. Sie bestehen aus zwei gelenkig miteinander verbundenen Fahrzeugteilen, die durch einen Falten- oder Wellenbalg miteinander verbunden sind. Der Balg umspannt hierbei üblicherweise eine Übergangsbrücke oder eine Plattform sowie das die beiden Fahrzeugteile verbindende Gelenk. Gelenkfahrzeuge in Form von Gelenkbussen werden auf allen Straßen eingesetzt. Es ist üblich, dass solche Fahrzeuge eine Rampenfahrt von 8 % durchführen können müssen. Um ein Durchhängen des Falten- oder Wellenbalges zu verhindern, ist ein Mittelrahmen vorgesehen, der den Balg mittig in zwei Balgelemente unterteilt.

Aus dem Stand der Technik gemäß der DE-A 966 307 ist eine Mittelrahmenstabilisierung bekannt, die dafür sorgt, dass der die Balgelemente verbindende Mittelrahmen zu den beiden gelenkig miteinander verbundenen Fahrzeugteilen immer den gleichen Abstand einnimmt. Diese bekannte Vorrichtung, die auch eine Überdehnung des Balgelementes verhindert, ist aufwändig und teuer in der Herstellung.

Die DE 40 34 984 C1 zeigt eine Aufhängung für einen einteiligen, freihängenden Balg, wobei der der Aufhängung dienende Galgen nicht in Richtung der Fahrzeuglängsachse verlängerbar ist. Nachteilig hierbei ist, dass sich bei Dehnung des Balges lediglich ein Balgelement dehnen kann.

In diesem Sinne ist aus der DE-OS 22 12 613 eine Balgverbindung für ein Straßenbahngelenkzug bekannt, bei dem der Faltenbalg durch einen Mittelrahmen in zwei gleiche Teile geteilt ist, wobei der Mittelrahmen zu einer Seite durch ein starres, nicht verlängerbares Gelenk mit dem einen Fahrzeugteil verbunden ist. Der Mittelrahmen zur anderen Seite hingegen ist durch eine Teleskopverbindung mit dem gegenüberliegenden Fahrzeugteil verbunden. Auch hier kann sich nur das eine Balgelement dehnen.

Aus der gattungsbildenden US-A4,781,123 ist eine Vorrichtung, bestehend aus zwei Teleskopen, bekannt, die an einem Ende jeweils an einem Fahrzeugteil angeordnet sind und mit ihrem anderen Ende den Mittelrahmen erfassen, der den Balg in die bereits zuvor genannten Balgelemente oder Balghälften teilt. Bei entsprechender Bewegung der beiden Fahrzeugteile relativ zueinander wird durch diese bekannte Vorrichtung erreicht, dass sich der Mittelrahmen ständig mittig zwischen den beiden Fahrzeugteilen befindet. Vom Grundsatz her ist eine solche Vorrichtung in Bezug auf das Ergebnis, nämlich die Stabilisierung des Mittelrahmens in der Mitte zwischen den beiden Fahrzeugteilen, durchaus optimal, allerdings ist die Vorrichtung bedingt durch die beiden Teleskope sehr aufwändig und damit teuer.

Darüber hinaus sind Teleskope verschleißanfällig, da sie Wind und Wetter ausgesetzt sind.

Aus der EP 824 411 B1 ist eine Mittelrahmenstabilisierung bekannt, wobei hier der Mittelrahmen durch eine federelastische Kolbenzylinderanordnung mit dem einen Fahrzeugteil verbunden ist. Hierdurch werden zwar beide Balgelemente gedehnt, jedoch nicht notwendigerweise mit gleichem Auszug, wie dies bei der US-4,781,123 der Fall ist.

Der Erfindung liegt daher die Aufgabe zu Grunde, eine Vorrichtung der eingangs genannten Art bereitzustellen, die einfach und preiswert in der Herstellung und der Wartung ist und die eine Überdehnung der Balgelemente des Balges sicher verhindert.

Die Aufgabe wird nach einer ersten Variante erfindungsgemäß dadurch gelöst, dass der Mittelrahmen zu beiden Seiten durch ein elastisches Band mit dem jeweiligen Fahrzeugteil verbunden ist. Ein solches elastisches Band, z. B. aus einem Elastomerwerkstoff (insbesondere Gummimaterial), stellt sich als ein extrem preiswertes Teil dar. Ist ein solches elastisches Band verschlissen, so wird es einfach ausgetauscht. Auf Grund des geringen Preises sind solche Wartungsarbeiten ausnehmend günstig.

Eine zweite Variante zeichnet sich erfindungsgemäß dadurch aus, dass der Metallrahmen zu beiden Seiten durch zwei V-förmig auf den Metallrahmen zulaufende elastische Bänder mit dem jeweiligen Fahrzeugteil verbunden ist.

Durch die V-förmige Anordnung der Bänder wird neben der Stabilisierung der Stellung des Mittelrahmens im Wesentlichen genau mittig zwischen den beiden Fahrzeugteilen auch noch eine gewisse seitliche Stabilisierung des Mittelrahmens erreicht.

Darüber hinaus wird ganz allgemein durch die Stabilisierung des Mittelrahmens durch elastische Bänder auch eine Dämpfung der Schwingungsbewegung des Mittelrahmens zwischen den beiden Fahrzeugteilen erreicht.

Weitere vorteilhafte Merkmale sind den Unteransprüchen zu entnehmen.

So ist des Weiteren vorgesehen, dass bei einem Balg mit beabstandet zum Balgdach angeordneter Balgdecke die Vorrichtung zur Verhinderung der Überdehnung eines Balgelementes in dem Zwischenraum zwischen Balgdach und Balgdecke angeordnet ist. Die Anordnung in diesem Zwischenraum zwischen Balgdach und Balgdecke ist insofern möglich, da diese erfindungsgemäße Mittelrahmenstabilisierung relativ wenig Platz beansprucht.

Nach einem weiteren Merkmal ist vorgesehen, dass die beiden elastischen Bänder in der Mittelängsachse der Fahrzeugteile verlaufen, was bedeutet, dass die beiden elastischen Bänder fluchtend hintereinander angeordnet sind.

Zusammenfassend ist festzuhalten, dass durch den Einsatz elastischer Bänder eine extrem preiswerte Mittelrahmenstabilisierung bereitgestellt werden kann, die auch vom Preis her im Wesentlichen allen bekannten Mittelrahmenstabilisierungen weit überlegen ist. Dies gilt auch dann, wenn man berücksichtigt, dass ein solches Gummiband möglicherweise häufig ausgetauscht werden muss, da solche Gummibänder als Massenartikel extrem kostengünstig sind.

Anhand der Zeichnung wird die Erfindung nachstehend beispielhaft näher erläutert.
- Fig. 1: zeigt die erfindungsgemäße Vorrichtung in einer ersten Variante, bei der der Mittelrahmen durch zwei elastische Bänder gehalten ist;
- Fig. 2: zeigt die erfindungsgemäße Vorrichtung in einer zweiten Variante, bei der zu jeder Seite des Mittelrahmens zwei Bänder V-förmig auf den Mittelrahmen zulaufen.

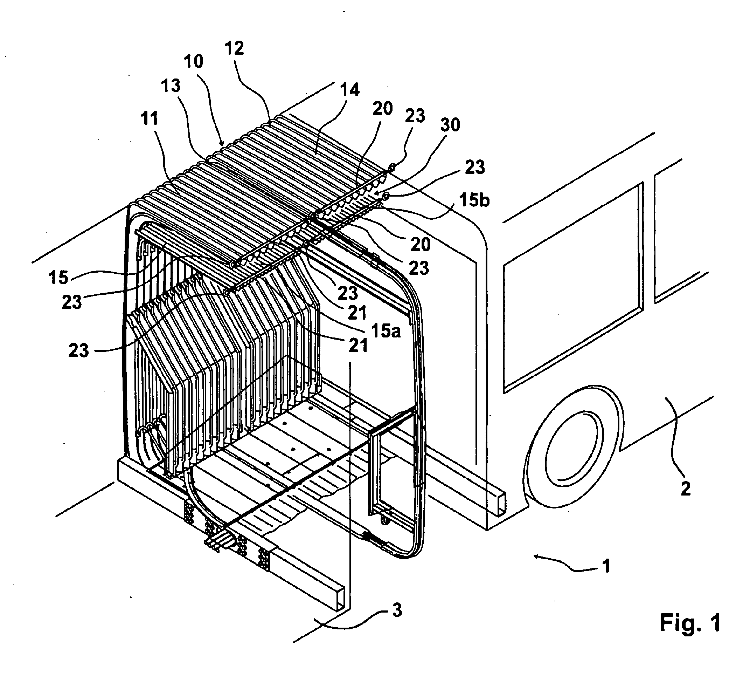

Die Zeichnung zeigt gemäß Fig. 1 schematisch die beiden Fahrzeugteile 2, 3 eines Gelenkbusses 1, wobei sich zwischen den beiden Fahrzeugteilen 1, 2 der mit 10 bezeichnete Balg befindet. Der mit 10 bezeichnete Balg, im vorliegenden Fall ein Wellenbalg, umfasst die beiden Balgelemente 11 und 12, die durch den mit 13 bezeichneten Mittelrahmen verbunden sind. Der mit 10 bezeichnete Balg weist unterhalb des Daches 14 eine eingezogene Balgdecke 15 auf. Auch diese Balgdecke 15 ist in zwei Abschnitte 15a, 15b durch eine am Mittelrahmen 13 angeordnete Deckentraverse 17 geteilt.

Um nun den Mittelrahmen 13 in seiner Lage etwa mittig zwischen den beiden Fahrzeugteilen zu stabilisieren, sind nach einer ersten Variante über dem Balgdach 14 zwei gummielastische Bänder 20, 21 vorgesehen, wobei die Anbindung der gummielastischen Bänder endseitig durch am Mittelrahmen und durch an den Fahrzeugteilen angeordnete Ösen 23 erfolgt. Die beiden gummielastischen Bänder 20, 21 stehen unter einer gewissen Vorspannung, die dafür sorgt, dass sich der Rahmen immer genau mittig zwischen den beiden Fahrzeugteilen befindet.

Befindet sich unterhalb des Balgdaches 14 eine Balgdecke 15, so können die beiden zuvor genannten gummielastischen Bänder 20, 21 in diesem Zwischenraum 30 untergebracht sein, wie sich dies ebenfalls aus der figürlichen Darstellung ergibt. Auch hier erfolgt die Verbindung der Gummibänder 20, 21 mit den Fahrzeugteilen und auch dem Mittelrahmen durch Ösen 23.

Die Gummibänder sind jeweils endseitig mit Haken versehen, mit denen die Gummibänder mit den Ösen 23 verbindbar sind. Mithin ist der Austausch derartiger Gummibänder bei Verschleiß problemlos möglich. Die Verwendung solcher Gummibänder zur Mittelrahmenstabilisierung ist demzufolge preiswert und hocheffizient.

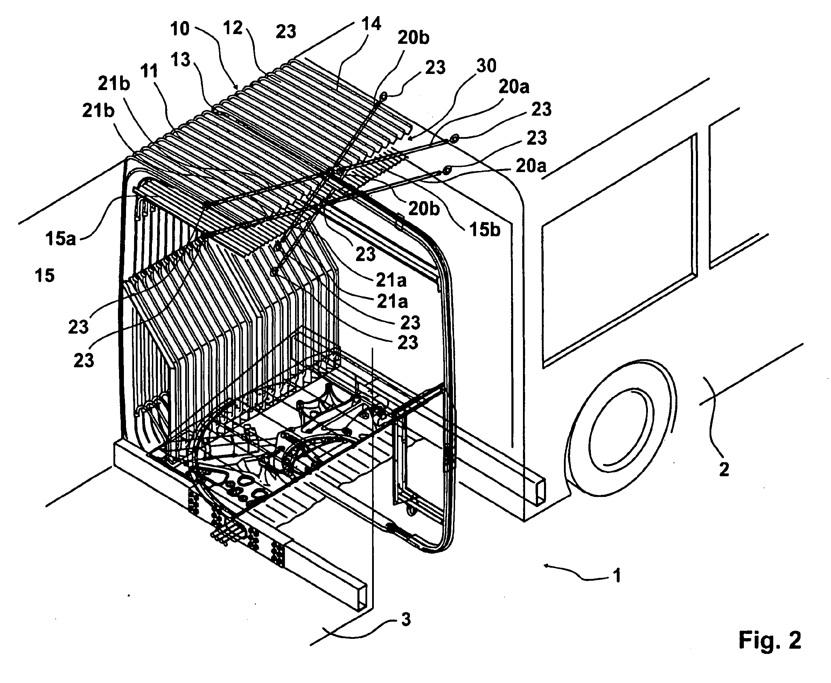

Als zweite Variante ist gemäß Fig. 2 vorgesehen, den Mittelrahmen 13 zu beiden Seiten durch jeweils zwei V-förmig auf den Metallrahmen zulaufende Bänder 20a, 20b; 21 a, 21 b zu stabilisieren und in seiner Bewegung zu dämpfen. Die Anordnung der Vorrichtung mit jeweils zwei Bändern zu jeder Seite kann auch hier, wie bereits oben beschrieben, zwischen Balgdach und Balgdecke vorgenommen werden. Die Bezugszeichen in Fig. 2 entsprechend im Übrigen denen in Fig. 1.

## Patentansprüche

1. Vorrichtung zur Verhinderung der Überdehnung eines Falten- oder Wellenbalgelementes (11, 12) eines durch einen Mittelrahmen (13) geteilten Falten- oder Wellenbalges (10), der zwischen zwei gelenkig miteinander verbundenen Fahrzeugteilen (2, 3) angeordnet ist, wobei der Mittelrahmen (13) mit dem mindestens einen Fahrzeugteil (2, 3) durch eine auf Zug beanspruchbare Federeinrichtung (20, 21) verbunden ist
**dadurch gekennzeichnet,**
**dass** der Mittelrahmen (13) zu beiden Seiten durch mindestens ein elastisches Band (20, 21) mit dem jeweiligen Fahrzeugteil (2, 3) verbunden ist.

2. Vorrichtung nach Anspruch 1,
**dadurch gekennzeichnet,**
**dass** der Mittelrahmen (13) zu beiden Seiten durch zwei V-förmig auf den Mittelrahmen (13) zulaufende elastische Bänder (20a, 20b; 21 a, 21b) mit dem jeweiligen Fahrzeugteil verbunden sind.

3. Vorrichtung nach Anspruch 1 oder 2,
**dadurch gekennzeichnet,**
**dass** das elastische Band (20, 21) einen Elastomerwerkstoff aufweist.

4. Vorrichtung nach einem oder mehreren der voranstehenden Ansprüche,
**dadurch gekennzeichnet,**
**dass** bei einem Balg mit beabstandet zum Balgdach angeordneter Balgdecke (15) die Vorrichtung in dem Zwischenraum (30) zwischen Balgdach (14) und Balgdecke (15) angeordnet ist.

5. Vorrichtung nach einem oder mehreren der voranstehenden Ansprüche,
**dadurch gekennzeichnet,**
**dass** die beiden elastischen Bänder (20, 21) in der Mittellängsachse der Fahrzeugteile (2, 3) verlaufen.

## Claims

1. An apparatus for preventing an element (11, 12) of a pleated or undulated bellows (10) divided by a central frame (13) from overstretching, said bellows being interposed between two hinge-linked vehicle parts (2, 3), said central frame (13) being connected to the at least one vehicle part (2, 3) by a spring system (20, 21) that is adapted to be tension-biased,
**characterized in**
**that** said central frame (13) is connected on either side to a respective one of the vehicle parts (2, 3) through at least one elastic band (20, 21).

2. The apparatus as set forth in claim 1,
**characterized in**
**that** said central frame (13) is connected on either side to a respective one of the vehicle parts by two V-shaped elastic bands (20a, 20b; 21 a, 21 b) converging to the central frame (13).

3. The apparatus as set forth in claim 1 or 2,
**characterized in**
**that** the elastic band (20, 21) comprises an elastomer material.

4. The apparatus as set forth in one or several of the afore mentioned claims,
**characterized in**
**that**, in the case of a bellows having a bellows ceiling (15) disposed at a distance from the bellows roof, the apparatus is disposed in the space (30) between bellows roof (14) and bellows ceiling (15).

5. The apparatus as set forth in one or several of the afore mentioned claims,
**characterized in**
**that** the two elastic bands (20, 21) extend in the center longitudinal axis of the vehicle parts (2, 3).

## Revendications

1. Dispositif pour empêcher un élément (11,12) d'un soufflet ondulé ou à plis (10) coupé par un cadre central (13) de se distendre, ce soufflet étant interposé entre deux parties de véhicule (2, 3) articulées, le cadre central (13) étant relié avec l'au moins une partie de véhicule (2, 3) par un système de ressorts (20, 21) apte à être sollicité en traction,
**caractérisé en ce**
**que** le cadre central (13) est relié des deux côtés à la partie de véhicule respective (2, 3) par au moins une courroie élastique (20, 21).

2. Dispositif selon la revendication 1,
**caractérisé en ce**
**que** le cadre central (13) est relié des deux côtés à la partie de véhicule respective par deux courroies élastiques (20a, 20b ; 21 a, 21 b) convergeant vers le cadre central (13) en forme de V.

3. Dispositif selon la revendication 1 ou 2,
**caractérisé en ce**
**que** la courroie élastique (20, 21) comporte une matière en élastomère.

4. Dispositif selon une ou plusieurs des revendications précédentes,
**caractérisé en ce**
**que**, dans le cas d'un soufflet dont le plafond (15) est disposé à distance de la toiture, le dispositif est disposé dans l'espace (30) ménagé entre la toiture (14) et le plafond (15) du soufflet.

5. Dispositif selon une ou plusieurs des revendications précédentes,
**caractérisé en ce**
**que** les deux courroies élastiques (20, 21) s'étendent dans l'axe longitudinal médian des parties de véhicule (2, 3).
